# EUROPEAN PATENT APPLICATION

(11) **EP 2 953 366 A1**
(43) Date of publication of application: **09.12.2015**
(21) Application number: 13750835.4
(22) Date of filing: 21.03.2013
(51) Int. Cl.: H04N 19/50

(54) **VIDEO CODING DEVICE AND VIDEO CODING METHOD**

(30) Priority: 31.01.2013 JP 2013017841
(71) Applicant: Kabushiki Kaisha Toshiba, Minato-ku Tokyo 105-8001 (JP)
(72) Inventor: KAWASHIMA, Yuji, Tokyo 105-8001 (JP); KIKUCHI, Yoshihiro, Tokyo 105-8001 (JP)
(74) Representative: Henkel, Breuer & Partner
(86) International application number: PCT/JP2013/058163
(87) International publication number: WO 2014/119005

(57) **Abstract**

In order to provide a moving picture coding apparatus and a moving picture coding method capable of further improving coding efficiency, the moving picture coding apparatus comprises a controller. The controller performs control such that coded data are created using an inter-prediction structure in which the maximum number of consecutive B-pictures in a GOP is set to "N", and the number of layers in a reference relationship between the B-pictures is set to "L".

## Description

### Technical Field

Embodiments of the present invention relate to a moving picture coding apparatus and a moving picture coding method.

### Background Art

According to the H.264 specification as a moving picture coding scheme, reference is allowed for a plurality of reference pictures by introducing a decoded picture buffer (DPB). Introduction of the DPB contributes to improvement of coding efficiency in H.264. The DPB has a constraint in the number of reference pictures due to a size limitation. However, the DPB can reference a temporally distant picture as well as a temporally close picture for a decoded picture by using a decoded picture marking process and the like.

In the moving picture coding scheme such as H.264, an I-picture, a P-picture, and a B-picture are employed. Typically, the amount of the created codes is smaller in the order to the I-picture, the P-picture, and the B-picture. Therefore, as the number of B-pictures increases, a stream code amount decreases, and coding efficiency is improved.

In MPEG-2 as a moving picture coding scheme, as the number of B-pictures increases, a temporal distance to the picture referenced by the B-picture becomes distant. For this reason, in MPEG-2, it is difficult to predict the B-picture, and coding efficiency is aggravated. In this regard, in H.264, by introducing a reference B-picture, that is, a picture where reference is allowed from a B-picture to a B-picture, coding efficiency is improved.

A reference relationship between B-pictures may have a hierarchical structure in which reference is allowed only from an upper layer to a lower layer. As a result, a picture belonging to a certain layer can be appropriately decoded if a picture in the lower layer has been decoded. This hierarchy may be employed in high-rate reproduction.

### Citation List

### Non Patent Literature

Non Patent Literature 1: ARIB STD-B32 Part 1, Appendix 2, Chapter3 3.6

### Summary of Invention

### Technical Problem

The H.264 specifications in the ARIB standards define restrictions of a GOP (Group of Pictures) structure as follows for enabling random access reproduction, high-speed reproduction and others in broadcasting, distribution and others. An unreference B picture and a reference B picture are decoded immediately after an I picture or a P picture to be displayed immediately after it. It is assumed that the I picture or the P picture is in the same GOP as the unreference B picture or the reference B picture. The unreference B picture refers to only (a) a frame or a field pair of the I picture or the P picture immediately preceding or following it in the display order, or (b) a frame or a field pair of the reference B picture that immediately precedes or follows it in the display order and is closer than the I picture or the P picture immediately preceding or following it in the display order. The reference B picture refers to only (a) a frame or a field pair of the I picture or the P picture immediately preceding or following it in the display order, or (b) a field of the reference B picture forming the same frame. A reference relationship between the B pictures based on constraints of the above GOP structure can take a hierarchical structure that allows only the reference from an upper layer to a lower layer. This necessarily enables the decoding of the picture in a certain layer provided that a picture at a lower layer is already decoded. The fast reproduction can use this.

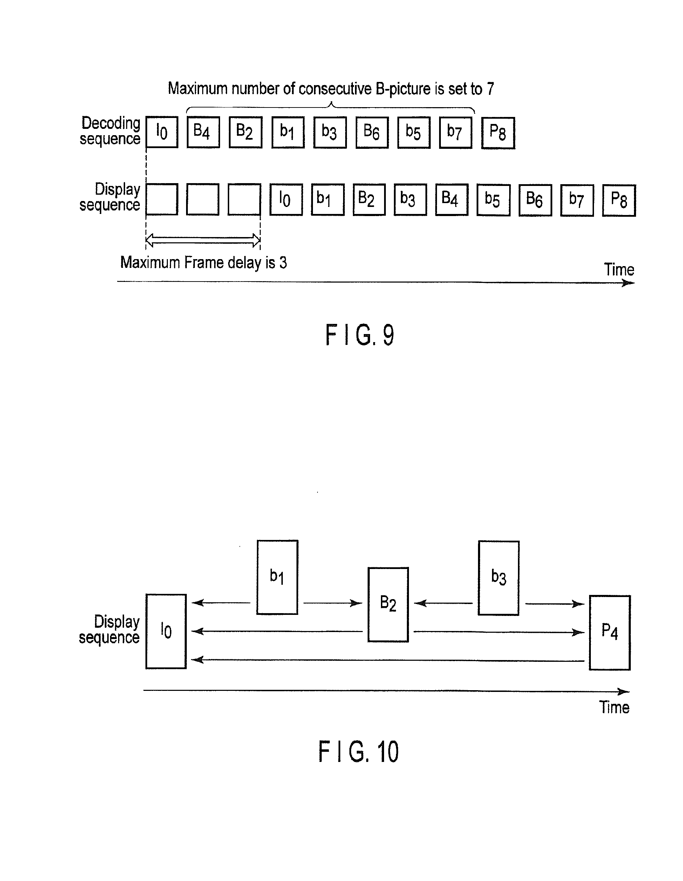

However, reference from an unreference B picture to a reference B picture is impossible under the constraints of the present GOP structure. FIG. 10 is a diagram illustrating an inter-prediction structure of each picture included in a GOP as an example of the H.264 of the current ARIB standard. Based on the reference relationship between the pictures, I₀ and P₄ are in a zeroth layer, B₂ is in a first layer, and b₁ and b₃ are in a second layer. The zeroth layer is formed of the I pictures or the P pictures. The first layer is formed of the reference B pictures. The second layer is formed of the unreference B pictures. Therefore, the reference relationship between the B pictures merely takes a two-layer structure as shown in FIG. 9. Under the constraints of the present GOP structure, when a frame rate of the input image signal increases, the number of the I pictures or P pictures contained per unit time increases in proportion to the frame rate. Consequently, the encoding efficiency lowers. Therefore, even when the frame rate of the input image signal increases, the encoding efficiency can be further improved when the B pictures can be increased in number.

An object of the invention is to provide a moving image encoding device and a moving image encoding method further improving the encoding efficiency.

### Solution to Problem

In an embodiment, a moving picture coding apparatus and a moving picture coding method capable of further improving coding efficiency, the moving picture coding apparatus comprises a controller. The controller performs control such that coded data are created using an inter-prediction structure in which the maximum number of consecutive B-pictures in a GOP is set to "N", and the number of layers in a reference relationship between the B-pictures is set to "L".

### Brief Description of Drawings

FIG. 1 is a block diagram showing a structure example of a moving image encoding device of the embodiment.
FIG. 2 shows a GOP structure of a reference B picture in the embodiment.
FIG. 3 shows a GOP structure of an unreference B picture in the embodiment.
FIG. 4 shows a GOP structure of each picture in a GOP in the embodiment.
FIG. 5 illustrates fast reproduction in the embodiment.
FIG. 6 illustrates fast reproduction of an example of the embodiment.
FIG. 7 illustrates fast reproduction in the embodiment.
FIG. 8 illustrates changing of a reproduction speed in the embodiment.
FIG. 9 is a diagram illustrating a decoding order and a display order of each picture included in the GOP according to an exemplary embodiment.
FIG. 10 is a diagram illustrating an inter-prediction structure of each picture included in the GOP according to a H.264 specification of the association of radio industries and businesses (ARIB) standard.

### Description of Embodiment

Hereinafter, an embodiment will be described in detail with reference to the drawings.

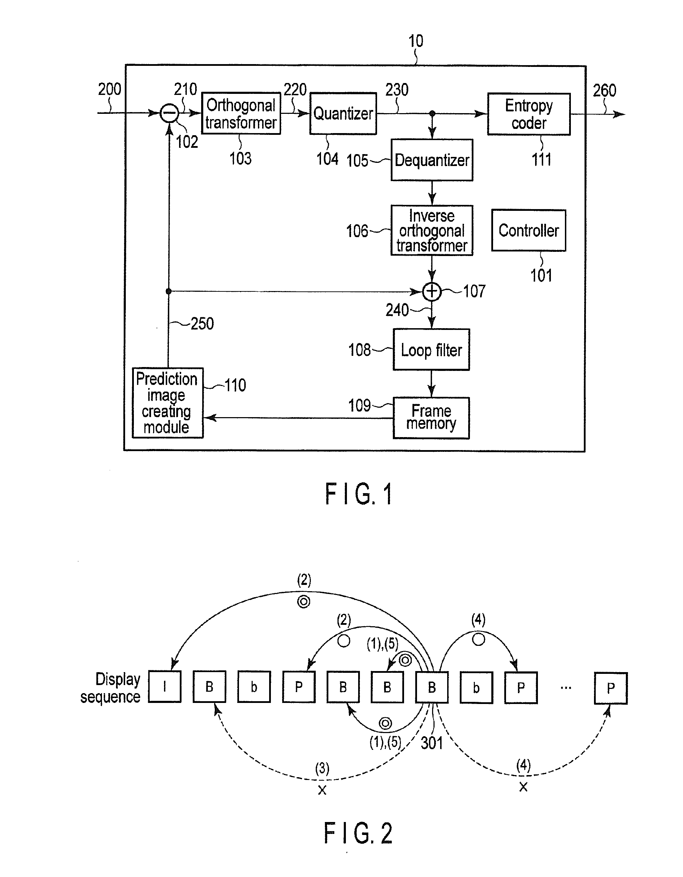

FIG. 1 is a block diagram showing a structure of a moving image encoding device of an embodiment. A moving image encoding device 10 generates an encoded bit row (encoded data) 260 from an input image signal (image data) 200. The moving image encoding device 10 comprises a controller (control means) 101, a subtracter 102, an orthogonal transformer 103, a quantizer 104, an inverse quantizer 105, an inverse orthogonal transformer 106, an adder 107, a loop filter 108, a frame memory 109, a predicted image generator 110 and an entropy encoder 111.

The controller 101 controls operations of various elements in the moving image encoding device 10.

The subtracter 102 externally receives an input image signal 200, and also receives a predicted image signal 250 from the predicted image generator 110 which will be described later. The subtracter 102 obtains a prediction error signal 210 by subtracting the predicted image signal 250 from the input image signal 200. The subtracter 102 outputs the prediction error signal 210 to the orthogonal transformer 102.

The orthogonal transformer 103 executes, e.g., discrete cosine transformation to obtain orthogonal transformation coefficient information 220 by orthogonally transforming the prediction error signal 210. The orthogonal transformer 103 outputs the orthogonal transformation coefficient information 220 to a quantizer 303.

The quantizer 104 quantizes the orthogonal transformation coefficient information 220 to obtain quantized orthogonal transformation coefficient information (quantized data) 230. The quantizer 104 outputs the quantized orthogonal transformation coefficient information 230 to the inverse quantizer 105 and the entropy encoder 111.

The inverse quantizer 105 and the inverse orthogonal transformer 106 locally decode the quantized orthogonal transformation coefficient information 230. The inverse orthogonal transformer 106 outputs the locally decoded quantized orthogonal transformation coefficient information 230 to the adder 107.

The adder 107 obtains a locally decoded image signal 240 by adding the predicted image signal 250 to the locally decoded quantized orthogonal transformation coefficient information 230. The adder 107 outputs the locally decoded image signal 240 to the loop filter 108. The locally decoded image signal 240 is supplied through a loop filter 306 to a frame memory 308.

The frame memory 109 supplies the locally decoded image signal 240 stored therein to the predicted image generator 110.

The predicted image generator 110 obtains the predicted image signal 250 based on the locally decoded image signal 240. The predicted image generator 110 outputs the predicted image signal 250 to a subtracter 301 and an adder 315.

The entropy encoder 111 obtains the encoded bit string 260 by encoding the quantized orthogonal transformation coefficient information 230. The entropy encoder 111 externally outputs the encoded bit string 260.

The moving image encoding device 10 generates the I picture, the P picture and the B picture, and generates the GOP formed of a plurality of pictures comprising at least one I picture as the encoded bit string 260. The encoding of only the picture in question generates the I picture. The encoding with the unidirectional prediction generates the P picture. The encoding with the bidirectional prediction generates the B. There are two kinds of B pictures, i.e., the B picture (reference B picture) which another picture can refer to and the B picture (unreference B picture) which another picture cannot refer to.

Next, constraints on the inter-prediction structure defined in the present embodiment will be described. The controller 101 performs control such that the coded bit string 260 is created based on at least one of constraints of the inter-prediction structure described below in the paragraphs (1) to (7). In the following description, it is assumed that the I-picture or the P-picture is a picture within the same GOP as that of the non-reference B-picture or the reference B-picture.
(1) The GOP structure allowing the reference from the reference B picture to the reference B picture. This GOP structure enables the reference from the reference B picture in one GOP to another reference B picture in the same GOP. The reference from the unreference B picture to the reference B picture is enabled as can be done in the prior art (H.264 specifications of the ARIB standards).
(2) The GOP structure allowing the reference from the B picture to the I or P picture preceding it in the display order. This GOP structure enables the reference in the GOP from the first B picture to the I or P picture preceding the first B picture in the display order. The B picture can refer to the I or P picture preceding it in the display order except for the conventionally allowed I or P picture immediately preceding it in the display order.
(3) The GOP structure disabling reference from the B picture to the B picture remoter in the display order than the immediately preceding P picture. This GOP structure disables the reference in the GOP from the first B picture to the second B picture remoter in the display order than the I picture or the P picture immediately preceding the first B picture.
(4) The GOP structure disabling reference from the B picture to the P picture remoter in the display order than the immediately following P picture. This GOP structure disables the reference in the GOP from the first B picture to another I picture or another P picture remoter in the display order than the I picture or the P picture immediately following the first B picture. In other words, among the I pictures or the P pictures following the first B picture in the display order in the GOP, this GOP structure performs the reference to only the I picture or the P picture immediately following the first B picture in the display order from the first B picture.
(5) The GOP structure performing reference from the B picture to only the reference B picture located closer than the I picture or the P picture immediately preceding or following the B picture in the display order. In other words, for the reference B pictures in the GOP, this GOP structure enables the reference in the GOP from the first B picture to the reference B picture closer in the display order than the I picture or the P picture immediately preceding or following the first B picture.
(6) The maximum number of consecutive B-pictures is set to "N." Here, "N" is set to "2^{L}-1," where "L" denotes the number of layers in a reference relationship between the B-pictures. That is, in this inter-prediction structure, a relationship "N=2^{L}-1" is satisfied, where "N" denotes the maximum number of the consecutive B-pictures within a single GOP, and "L" denotes the number of layers in the reference relationship between the B-pictures. For example, "L" is set to an integer equal to or greater than 3. If "L" is set to "3," "N" becomes "7."
(7) A difference (frame delay) between a decoding timing for a head picture (I-picture or a random access point (RAP) picture) in a decoding order within a GOP and a display timing for a first picture in a display order within the GOP is set to "M" frame intervals or smaller, where "M" is equal to "L." For example, "M" may be set to "3." In this example of the inter-prediction structure, a difference between a decoding timing for a head picture in a decoding order within a GOP and a display timing for a head picture in a display order within the GOP is set to "3" frame intervals or smaller. In this inter-prediction structure, a first picture in a display order within a GOP can starts to be displayed with a delay of "M" frame intervals at maximum if the decoding starts from the head of the GOP.

FIG. 2 shows the GOP structure for the reference B pictures in the embodiment. The GOP structure will be described below based on a reference B picture 301. In FIG. 2, "I", "P" "B" and "b" represent the I picture, the P picture, the reference B picture and the unreference B picture, respectively. In FIG. 2, the pictures in one GOP are aligned in the order of display. Solid line arrows show examples of relationships between the reference B picture 301 of which reference is enabled by the foregoing restriction (1), (2), (4) or (5) and other pictures. A circle mark ("○") annexed to the solid line arrow indicates that the H.264 specifications of the ARIB standards also enable the reference. A double circle mark ("⊚") annexed to the solid line arrow indicates that the restriction defined in the embodiment enables the reference. A broken line arrow indicates an example of a relationship between the reference B picture 301 of which reference is disabled by the foregoing restriction (3) or (4) and other pictures. Numbers annexed to the arrows correspond to the numbers of the applied restrictions, respectively. "×" annexed to the arrow indicates that reference is disabled.

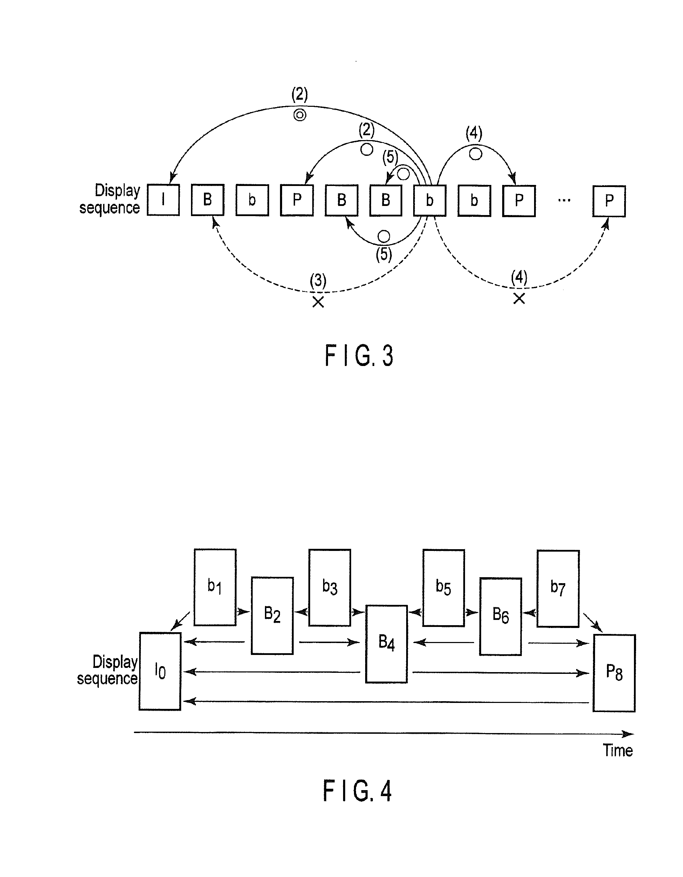

FIG. 3 shows the GOP structure of the unreference B picture of the embodiment. The GOP structure will be discussed based on an unreference B picture 302. In FIG. 3, "I", "P", "B" and "b" represent pictures similar to those in FIG. 2, respectively. In FIG. 3, the pictures in one GOP are aligned in the order of display. Solid line arrows show examples of relationships between the unreference B picture 302 of which reference is enabled by the foregoing restrictions (2), (4) or (5) and other pictures. A circle mark annexed to the solid line arrow indicates that the H.264 specifications of the ARIB standards also enable the reference. A double circle mark annexed to the solid line arrow indicates that the restriction defined in the embodiment enables the reference. A broken line arrow indicates an example of a relationship between the unreference B picture 301 of which reference is disabled by the foregoing restriction (3) or (4) and the other pictures. Numbers annexed to the arrows correspond to the numbers of the applied restrictions, respectively. "×" annexed to the arrow indicates that reference is disabled.

As shown in FIGS. 2 and 3, the pictures allowing the reference from the reference B picture and the pictures not allowing such reference are the same as the pictures allowing the reference from the unreference B picture and those not allowing the reference, respectively.

FIG. 4 is a diagram illustrating an inter-prediction structure of each picture included in a GOP according to an exemplary embodiment. In FIG. 4, each picture included in a GOP is arranged side by side along a display order. The arrows indicate a reference relationship between each picture depending on the constraints (1) to (7) described above. According to the reference relationship between each picture, pictures I₀ and P₈ are set to a 0th layer, a picture B₄ is set to a 1st layer, pictures B₂ and B₆ are set to a 2nd layer, and pictures b₁, b₃, b₅, and b₇ are set to a 3rd layer. That is, the 0th layer includes an I-picture or a P-picture. The 1st and 2nd layers include reference B-pictures. The 3rd layer includes a non-reference B-picture. That is, since reference is allowed only from an upper layer to a lower layer in a GOP, the controller 101 can create a coded bit string 260 using an inter-prediction structure in which the maximum number of consecutive B-pictures within a GOP is set to "7," and the number of layers in the reference relationship between B-pictures is set to "3" or greater. In addition, the controller 101 can create a coded bit string 260 using an inter-prediction structure in which a distance to a reference picture in bilateral prediction is symmetric for each B-picture in a GOP. Here, the reference picture refers to a picture referenced in coding or decoding of each picture. A comparative example will be described, in which the distance to the reference picture in bilateral prediction is not symmetric for each picture. When any B-picture has a higher correlation with a temporally distant reference picture than a temporally close reference picture, coding efficiency of the corresponding B-picture is degraded. In this regard, according to the present embodiment, if a distance to the reference picture in bilateral prediction is symmetric for each B-picture, coding efficiency of each B-picture is improved.

The decoder decodes the respective pictures based on an example of the GOP structure shown in FIG. 4, and displays them in the display order. The decoder normally reproduces the pictures by decoding and displaying all the pictures positioned in the zeroth to third layers in the one GOP in FIG. 4. The decoder can decode only the minimum necessary pictures in order to perform fast reproduction at a speed 2ⁿ times as fast as the normal reproduction speed already described with reference to FIG. 4.

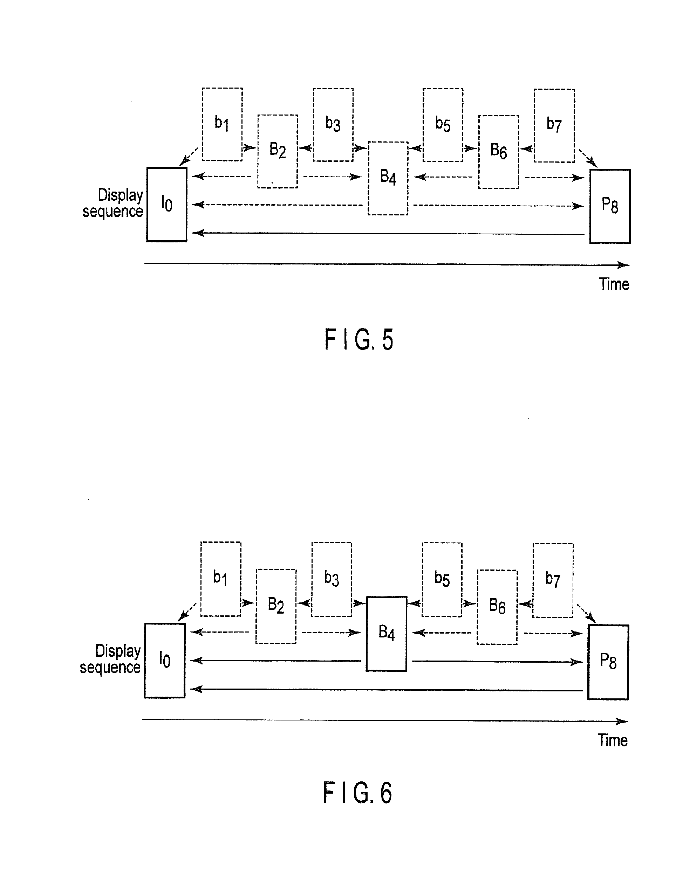

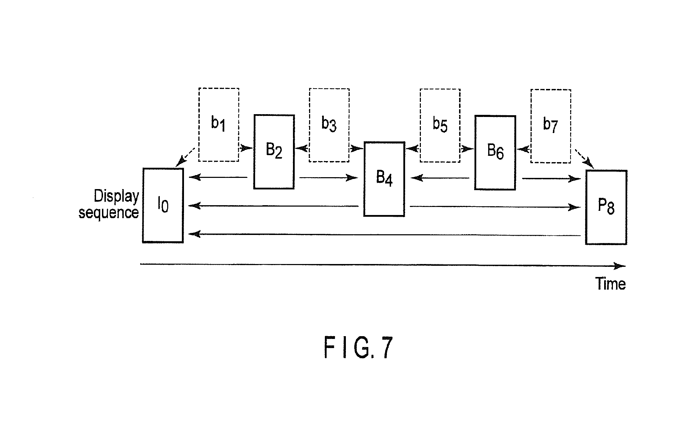

FIGS. 5 to 7 are diagrams illustrating exemplary high-rate reproduction in the hierarchical structure of FIG. 4. Similar to FIG. 4, each picture included in a GOP is arranged side by side along a display order in FIGS. 5 to 7. The arrows indicate a reference relationship between each picture based on the constraints (1) to (7) described above. The solid lines of FIGS. 5 to 7 indicate pictures used in high-rate reproduction and a relationship thereof. The dotted lines of FIGS. 5 to 7 indicate pictures that are not used in high-rate reproduction and a reference relationship thereof. In the high-rate reproduction of FIG. 5, the decoding process and the display process are performed only for the picture positioned in the 0th layer. In the high-rate reproduction of FIG. 6, the decoding process and the display process are performed only for the picture positioned in the 0th layer and the 1st layer. In the high-rate reproduction of FIG. 7, the decoding process and the display process are performed only for picture positioned in the 0th to 2nd layers. The reproduction rate changes depending on the number of pictures subjected to the decoding process and the display process. For this reason, the reproduction rate is faster in the order of typical reproduction of FIG. 4, the high-rate reproduction of FIG. 7, the high-rate reproduction of FIG. 6, and the high-rate reproduction of FIG. 5.

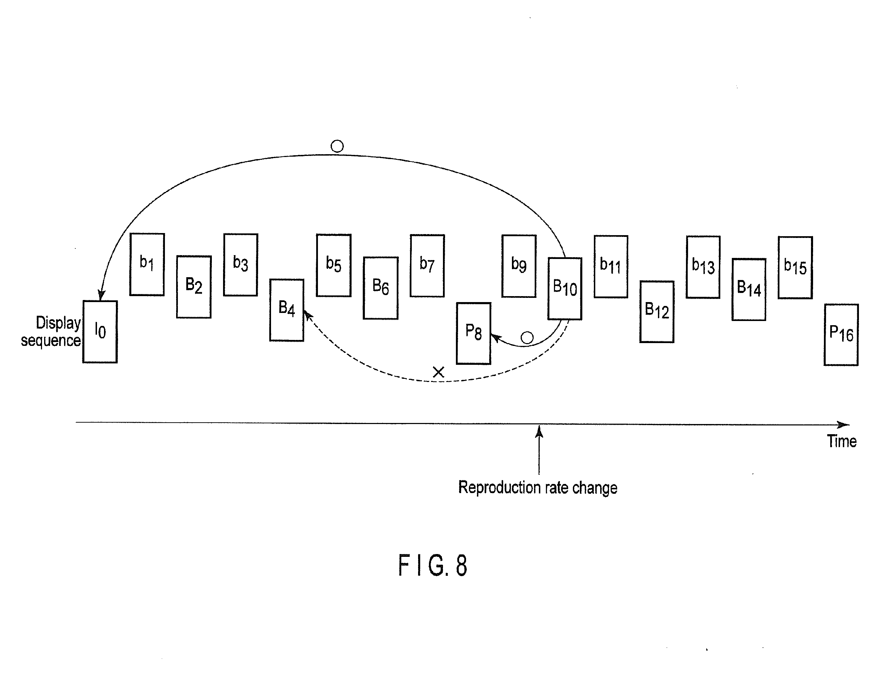

FIG. 8 shows an example to explain the reproduction speed changing. In FIG. 8, the pictures in the one GOP are aligned in the order of the display. In connection with B₁₀, arrows indicate a part of reference relationships based on the above restrictions. Solid line arrows show examples of relationships between B₁₀ allowing the reference and other pictures. A circle mark indicates that the reference is allowed. A broken line arrow indicates an example of a relationship between B₁₀ not allowing the reference and the other picture. A mark "X" indicates that the reference is not enabled. For example, the decoder performs the fast reproduction of the pictures in positions from I₀ to that immediately preceding B₁₀ by decoding only the pictures in the zeroth layer already described with reference to FIG. 5. For example, at the position immediately before B₁₀, the reproduction speed is reduced to the normal reproduction speed for reproducing the pictures in the zeroth to third layers already described with reference to FIG. 4. The restriction (3) disables B₁₀ to refer to B₄. Therefore, the decoder is not required to decode the undecoded B₄ for decoding B₁₀. However, B₁₀ can refer to not only P₈ but also I₀ which are decoded in the fast reproduction based on the restrictions (2). The decoder is not required to decode the undecoded picture only for the purpose of decoding B₁₀, and therefore the reproduction speed can be switched easily.

FIG. 9 is a diagram illustrating a display order and a decoding order for each picture included in a GOP in a sequential manner according to an exemplary embodiment. In FIG. 9, "I" denotes an I-picture, "P" denotes a P-picture, "B" denotes a reference B-picture, and "b" denotes a non-reference B-picture. The numerals denote a display order. Based on the constraint (6), the controller 101 performs control such that the coded bit string 260 is created using an inter-prediction structure in which the maximum number of consecutive B-pictures within a GOP is set to "7." Based on the constraint (7), the controller 101 performs control such that a coded bit string 260 is created using an inter-prediction structure in which a difference between a decoding timing of the picture I₀ as a head picture of the decoding order in a GOP and a display timing of the picture I₀ as a head picture of the display order in a GOP is set to 3 frame intervals or smaller. That is, the picture I₀ as a head picture of the display order in a GOP may start to be displayed with a delay of 3 frame intervals at maximum when the decoder starts to perform decoding from the head of the GOP. This delay is to prevent any picture from being not decoded even when a display timing for that picture is reached. In addition, the head picture of the decoding order may be a RAP picture other than the I-picture.

According to the present embodiment, based on the constraints (1) to (7), the coded bit string 260 can have an inter-prediction structure in which there are three or more layers between B-pictures, and a distance to the reference picture of each B-picture in bilateral prediction is symmetric. For this reason, the moving picture coding apparatus 10 can create a coded bit string 260 having an inter-prediction structure capable of maintaining or improving coding efficiency without increasing the number of I-pictures or P-pictures per unit time even when the frame rate of the input image signal increases. Furthermore, the moving picture coding apparatus 10 can create a coded bit string 260 having an inter-prediction structure capable of causing a decoder to decode the coded bit string 260 with a high reproduction rate, which is 2ⁿ times a typical reproduction rate, and easily changing a reproduction rate. Moreover, the moving picture coding apparatus 10 can create a coded bit string 260 having an inter-prediction structure capable of causing a decoder to suppress a frame delay in screen display as much as possible.

While several embodiments of the present invention have been described, they are just for description purposes and are not intended to limit the invention. Instead, it would be appreciated by those skilled in the art that modifications, alterations, and changes to the described embodiments may be possible without departing from the spirit and scope of the invention. Such embodiments and modifications thereof are intended to encompass the spirit and scope of the invention, as defined in the appended claims and equivalents thereof.

### Reference Signs List

- 10: Moving picture coding apparatus,
- 101: Controller (controller),
- 102: Subtractor,
- 103: Orthogonal transformer,
- 104: Quantizer,
- 105: Dequantizer,
- 106: Inverse orthogonal transformer,
- 107: Adder,
- 108: Loop filter,
- 109: Frame memory,
- 110: Prediction image creating section,
- 111: Entropy coder.

## Claims

1. A moving picture coding apparatus comprising a controller configured to perform control such that coded data are created using an inter-prediction structure in which a maximum count of consecutive B-pictures in a group of pictures (GOP) is set to "N", and a count of layers in a reference relationship between the B-pictures is set to "L".

2. The apparatus of claim 1, wherein the controller performs control such that the coded data are created using an inter-prediction structure in which a distance to a reference picture in bilateral prediction is symmetric for each of the B-pictures.

3. The apparatus of claim 2, wherein the "N" is set to 7, and the "L" is set to 3.

4. The apparatus of claim 3, wherein the control method performs control such that the coded data are created using an inter-prediction structure in which a difference between a decoding timing of a head picture in a decoding order in the GOP and a display timing of a head picture in a display order in the GOP is set to "M" frame intervals or smaller.

5. The apparatus of claim 4, wherein the "M" is equal to the "L".

6. A moving picture coding method for creating coded data using an inter-prediction structure in which a maximum count of consecutive B-pictures in a GOP is set to "N", and a count of layers in a reference relationship between the B-pictures is set to "L".
